# EUROPÄISCHE PATENTSCHRIFT

(11) **EP 0 384 124 B1**
(45) Veröffentlichungstag und Bekanntmachung des Hinweises auf die Patenterteilung: **15.06.1994**
(21) Anmeldenummer: 90101060.3
(22) Anmeldetag: 19.01.1990
(51) Int. Cl.: A23L 1/052, A23L 1/10, A23P 1/12, A23L 1/39

(54) **Verfahren zur Herstellung eines stärkehaltigen, granulären Instant-Produktes**
Process for preparing a starch-containing granulated instantaneous product
Procédé de fabrication d'un produit instantané en granulés contenant de l'amidon

(30) Priorität: 24.02.1989 DE 3905680
(43) Veröffentlichungstag der Anmeldung: 29.08.1990
(73) Patentinhaber: Kampffmeyer Mühlen GmbH, D-21107 Hamburg (DE)
(72) Erfinder: Lewandowski, Udo, D-2112 Jesteburg (DE); Driller, Karl-Heinz, D-2000 Hamburg 60 (DE); Jodlbauer, Heinz, Dr., D-3000 Hannover 1 (DE)
(74) Vertreter: Patentanwälte Hauck, Graalfs, Wehnert, Döring, Siemons

(56) Entgegenhaltungen:
- FR-A- 2 233 946
- FR-A- 2 614 765
- US-A- 3 445 239
- CEREAL CHEMISTRY vol. 52, no. 3(1), Mai 1975, Seiten 283 - 297; C.MERCIER:"Modification of carbohydrate components by extrusion-cooking of cereals products"
- PATENT ABSTRACTS OF JAPAN vol. 5, no. 98 (C-60)(770) 25 Juni 1981,& JP-A-56 39764 (YUKIJIRUSHI NIYUUGIYOU) 15 April 1981,

## Beschreibung

Die Erfindung bezieht sich auf ein Verfahren zur Herstellung eines Soßenbinders oder Instant-Grieß nach dem Oberbegriff des Patentanspruchs 1.

In der Lebensmittelindustrie sind Instantprodukte weit verbreitet. Im engeren Sinn handelt es sich dabei um Produkte, die aus unterschiedlichen Nahrungsmitteln, wie zum Beispiel Kaffee oder Milch, durch Extraktion und anschließender Trocknung der Extrakte gewonnen werden können. Ihre besonderen Eigenschaften bestehen darin, daß sie eine ausgezeichnete Haltbarkeit aufweisen und darüber hinaus bei Kontakt mit Wasser schnell und rückstandslos in Lösung gehen, also leicht verarbeitbar sind. Im weiteren Sinne bezeichnet man mit Instantprodukten solche Produkte, die eine schnelle und bequeme Zubereitung durch Aufkochen bzw. Anrühren in Wasser ermöglichen.

Aus der JP-A-56 39 764 ist eine Instant-Mehlsoße (White Sauce) bekanntgeworden, welche im wesentlichen aus einer Mischung aus hitzebehandeltem Weizenmehl und pulverförmigem Fett besteht.

Aus der FR-A-2 233 946 ist bekannt, zur Erzeugung diätetischer Produkte für den medizinischen Bereich ein stärkehaltiges Granulat dadurch herzustellen, daß eine stärkehaltige Mischung ohne Zusatz von Fremdwasser nur mit Konstitutionswasser unter Einsatz von Wärme und Druck in einem Doppelschneckenextruder extrudiert, das Extrudat getrocknet und zerkleinert wird. Als stärkehaltige Grundstoffe können Getreidemehl oder Mais eingesetzt werden und als Zusatzstoffe Proteine, Aromen und Farbstoffe enthalten sein. Die Extrusionstemperatur liegt in einem Bereich von 120 bis 180°C und die Extruderschnecke weist eine Länge von 110 cm auf, wobei die Extrusionszeit 20 bis 150 Sekunden beträgt.

Der Erfindung liegt die Aufgabe zugrunde, ein Verfahren zur Herstellung eines Soßenbinders oder Instant-Grieß anzugeben, das bequem und reproduzierbar durchführbar ist, zu einem Produkt mit einer gleichmäßigen Struktur führt und sich leicht anrühren läßt.

Diese Aufgabe wird durch die Merkmale des Patentanspruchs 1 gelöst.

Bei dem erfindungsgemäßen Verfahren wird ein Getreidemahlerzeugnis mit einer Feuchte von 20 bis 35%, ggf. mit weiteren Zusatzstoffen vermischt, einer Druck- und Temperaturbehandlung in einem Extruder, vorzugsweise einem Doppelschneckenextruder, unterworfen. Das erhaltene Gelatinat wird getrocknet und zu Teilchen in einer Größe in einem Bereich von >0 bis 1000 »m vermahlen.

Die beanspruchte Feuchte von 20 bis 35% kann nur zum Teil aus Konstitutionswasser bestehen. Sie wird bei Getreidemahlerzeugnissen nur erhalten, wenn vorher eine Konditionierung stattgefunden hat, d.h. eine Feuchtigkeitssättigung des Korns.

Das erfindungsgemäße Verfahren führt zu einem Instantprodukt und läßt zum Beispiel bei einem Soßenbinder eine Auflösung innerhalb von einer Minute zu. Bei Instant-Grieß ergibt sich eine sehr kurze Quellzeit von 2 bis 5 Minuten, wonach das Produkt verzehrfähig ist.

Die Extrusion wird vorzugsweise mit einer doppelgängigen Schnecke vorgenommen, deren Konfiguration zwei Plastifizier- und Scherzonen beinhaltet. Das nach der Extrusion erhaltene Gelatinat wird getrockent und dann in der angegebenen Größe vermahlen. Die Trocknung kann dabei vorzugsweise mit einem Bandtrockner bzw. Heißluft oder durch eine Mikrowellenbehandlung vorgenommen werden. Die Vermahlung des Gelatinats erfolgt zum Beispiel über ein Brech- und/oder Riffelwalzensystem.

Nach einer Ausgestaltung der Erfindung wird das Mahlgut in einem weiteren Schritt in zwei Fraktionen aufgetrennt, deren eine als Soßenbinderfraktionteilchen mit einem Durchmesser in einem Bereich von 150 bis 355 »m enthält und deren anderer als Instant-Grieß verwenbar ist und Teilchen in einem Größenbereich von 355 bis 1000 »m enthält. Die Fraktionierung kann zum Beispiel mittels eines Schwingsiebes erfolgen, das einen entsprechenden Korngrößenbereich aufweist.

Bei den stärkehaltigen Materialien handelt es sich bevorzugt um Weizenmehl, Weizendunst, Maismehl, Durum-Mehl oder Durum-Wiezengrieß. Darüber hinaus können den Ausgangsmaterialien auch noch Zusatzstoffe aus einer oder mehreren der folgenden Gruppen zugemischt werden:
Emulgatoren, insbesondere zum Beispiel Mon-diglyceride, Lecithin
Eiweiße, zum Beispiel Milcheiweiße, Molkeneiweiße, Getreideeiweiße
Aromen/Gewürze, zum Beispiels Würzmittel, Salz, Geschmacksverstärker, Currypulver, Paprikapulver und
Farbstoffe, zum Beispiel Zuckercouleur.

Die Extrusion nach dem erfindungsgemäßen Verfahren wird vorzugsweise mit einer Produktfeuchte von 30% vorgenommen. Der Extrusionsdruck kann dabei in einem Bereich von 80 bis 160 bar, vorzugsweise 40 bar, liegen und die Temperatur in einem Bereich von 60 bis 140°, vorzugsweise 80°. Die Länge der Extruderschnecke bewegt sich in einem Bereich von 900 bis 2500 mm, vorzugsweise 1250 mm. Als Extrusionszeit kann dabei ein Zeitraum zwischen 30 Sekunden und 5 Minuten, vorzugsweise 2 Minuten, gewählt werden.

Es hat sich herausgestellt, daß die nach dem erfindungsgemäßen Verfahren hergestellten Produkte besondere Eigenschaften aufweisen. So bildet zum Beispiel die als Soßenbinder verwendete Teilchenfraktion in einer kochenden Flüssigkeit ein echtes Gel mit einer glatten Textur aus. Dadurch kann das Produkt beliebig eingefroren bzw. aufgetaut werden, ohne daß dabei Strukturänderungen auftreten.

Auch der erhaltene Grieß weist eine besonders beständige Struktur auf. Denkbar ist zum Beispiel, auf diese Weise Instant-Maisgrieß, Instant-Hartweizengrieß oder Instant-Weichweizengrieß herzustellen.

Bei dem erfindungsgemäßen Verfahren läßt sich das Produkt auch mit höheren Fettanteilen herstellen. Es lassen sich weiterhin ebenfalls problemlos sowohl gehärtete als auch ungehärtete Fette verarbeiten, wodurch die Anwendungsmöglichkeiten, gerade im diätetischen Bereich, vergrößert werden. Als Fettfraktion kann dabei ein freifließendes 100%iges Fettpulver verwendet werden, das aus einzelnen Fettkügelchen mit einem Durchmesser von 20 bis 80 »m, vorzugsweise 30 »m, besteht, deren Fettkristalle eine sogenannte β-Struktur aufweisen. Bei dieser Struktur handelt es sich um die stabilste Fettkristallstruktur.

Solche pulverförmigen Fette sind besonders gut geeignet, mit anderen pulverigen Trägersubstanzen eine homogene und haltbare Mischung zu ergeben, ohne daß dabei die spezifischen Fetteigenschaften verloren gehen. Die bekannten Verfahren zur Herstellung des Fettpulvers beinhaltet die Herstellung einer Emulsion bei ca. 30 bis 55° und einer speziellen Aufheizrate. Nach Abschluß des Emulgiervorgangs wird das Fett mit einem Druck von 10 bis 35 bar über ein die Kristallstruktur beeinflussendes Düsensystem in einen Kühlturm gesprüht. Dabei beeinflussen die Düsenkonfiguration, der Druck und die Temperatur die Kristallstruktur maßgeblich. Bevorzugt eingesetzte konische Düsen besitzen zum Beispiel einen gewissen Drall und einen Durchmesser von 1,2 bis 2,8 mm. Die Temperatur im Kühl- bzw. Sprühturm beträgt -10° bis -25°C.

Im folgenden werden einige Produktbeispiele für eine Mehlschwitze bestehend aus Soßenbinder der Fraktion 200 bis 355 »m und einem Fettpulver mit β-Struktur angegeben.

### Produktbeispiel I

90% Soßenbinder (Fraktion 200 bis 355 »m)
10% Fettpulver, vorzugsweise Sojafett bzw. Palmkernfett, nicht gehärtet.

### Produktbeispiel II

70% Soßenbinder (Fraktion 150 bis 355 »m)
30% Fettpulver, vorzugsweise fraktionierte Soja- oder Palmkernfette.

### Produktbeispiel III

50% Soßenbinder (Fraktion 150 bis 355 »m)
50% Fettpulver, vorzugsweise zum Teil gehärtete Soja- oder Palmkernfette.

## Patentansprüche

1. Verfahren zur Herstellung eines Soßenbinders oder Instant-Grieß, gekennzeichnet durch folgende Verfahrensschritte:
a) ein Getreidemahlerzeugnis mit einer Feuchte von 20 bis 35%, ggf. mit weiteren Zusatzstoffen vermischt, wird einer Druck- und Temperaturbehandlung in einem Extruder, vorzugsweise einem Doppelschneckenextruder, unterworfen;
b) das erhaltene Gelatinat wird getrocknet und
zu Teilchen mit einer Größe in einem Bereich von >0 bis 1000 »m vermahlen.

2. Verfahren nach Anspruch 1, dadurch gekennzeichnet, daß das Mahlgut in einem weiteren Schritt in zwei Fraktionen aufgetrennt wird, deren eine als Soßenbinderfraktion Teilchen mit einem Durchmesser in einem Bereich von 150 bis 355 »m enthält und deren andere als Instant-Grieß verwendbar ist und Teilchen in einem Größenbereich von 355 bis 1000 Mikrometer enthält.

3. Verfahren nach den Ansprüchen 1 oder 2, dadurch gekennzeichnet, daß als Getreidemahlerzeugnis Weizenmehl, -dunst, Maismehl, Durum-Mehl oder Durum-Weizengries verwendet werden.

4. Verfahren nach den Ansprüchen 1 bis 3, dadurch gekennzeichnet, daß Zusatzstoffe aus mindestens einer der Gruppen Emulgatoren, Proteine, Aromen/Gewürze und Farbstoffe gewählt werden.

5. Verfahren nach einem der Ansprüche 1 bis 4, dadurch gekennzeichnet, daß die Extrusion bei Produktfeuchte von 30%, vorgenommen wird.

6. Verfahren nach den Ansprüchen 1 bis 5, dadurch gekennzeichnet, daß die Extrusion bei einem Druck von 80 bis 160 bar, vorzugsweise 140 bar, vorgenommen wird.

7. Verfahren nach den Ansprüchen 1 bis 6, dadurch gekennzeichnet, daß die Extrusionstemperatur in einem Bereich von 60 bis 140°C, vorzugsweise 80°C, gewählt wird.

8. Verfahren nach einem der Ansprüche 1 bis 7, dadurch gekennzeichnet, daß die Länge der Extruderschnecke 900 bis 2500 mm beträgt, vorzugsweise 1250 mm.

9. Verfahren nach einem der Ansprüche 1 bis 8, dadurch gekennzeichnet, daß die Extrusionszeit zwischen 30 Sekunden und 5 Minuten, vorzugsweise 2 Minuten beträgt.

10. Verwendung des nach dem Verfahren aus dem Ansprüchen 1 bis 9 erhaltenen Granulates, vorzugsweise der Soßenbinderfraktion, zur Herstellung einer Mehlschwitze, wobei dem Granulat ein freifließendes 100%iges Fettpulver zugemischt wird, das aus Kügelchen mit einem Durchmesser von 20 bis 80 Mikrometer besteht, deren Fettkristallstruktur vorzugsweise eine β-Struktur aufweist.

11. Verwendung eines Granulats zur Herstellung einer Mehlschwitze nach Anspruch 10, dadurch gekennzeichnet, daß das zugemischte Fettpulver in einem Kältesprühverfahren hergestellt ist.

## Claims

1. A process for preparing a starch-containing granulated instantaneous product characterized by the following process steps:
a) a grain flour having a moisture content from 20 to 35%, possibly mixed with further additives, is subject to a pressure and temperature treatment in an extruder, preferably a double screw extruder;
b) the obtained gelatinate is dried and
c) ground to particles at a size within a range of from >0 to 1000 »m.

2. The process according to claim 1, characterized in that in a further step the ground product is separated into two fractions, one of which being that for the thickening agent for sauces and containing particles having a diameter within a range of from 150 to 355 »m and the other one of which being usable as an instant semolina and containing particles within a size range of from 355 to 1000 micrometers.

3. The process according to claim 1 or 2, characterized in that the grain flours used are wheat flour, finest wheat flour, maize flour, Durum flour or Durum semolina.

4. The process according to claims 1 to 3, characterized in that additives are chosen from at least one of the groups of emulsifiers, proteins, aromas/spices and dye-stuffs.

5. The process according to any of the claims 1 to 4, characterized in that the extrusion takes place at a moisture content of 30% of the product.

6. The process according to claims 1 to 5, characterized in that the extrusion takes place at a pressure of from 80 to 160 bar, preferably 140 bar.

7. The process according to claims 1 to 5, characterized in that the extrusion temperature is chosen within a range of from 60 to 140°C, preferably 80°C.

8. The process according to any of the claims 1 to 7, characterized in that the length of the extruder screw is 900 to 2500 mm, preferably 1250 mm.

9. The process according to any of the claims 1 to 8, characterized in that the time of extrusion is between 30 seconds and 5 minutes, preferably 2 minutes.

10. The use of the granulated material obtained according to the claims 1 to 9, preferably the fraction for the thickening agent for sauces, for the preparation of a roux, said granulated material being mixed with a free flowing 100% fat powder consisting of globules having a diameter of from 20 to 80 micrometers, the fat crystal structure thereof preferably having a β-structure.

11. The use of a granulated material for the preparation of a roux according to claim 10, characterized in that the added fat powder is produced in a low temperature spraying process.

## Revendications

1. Procédé de fabrication d'un liant de sauce ou d'une semoule instantanée, caractérisé par las étapes de procédé suivantes:
a) La mouture d'un moulin à céréales, ayant une humidité de 20 à 35%, mélangée le cas échéant à des additifs, subit un traitement par pression et par chauffage dans une extrudeuse - et de préférence dans une extrudeuse à vis double;
b) le produit gélatineux obtenu est séché et
broyé en particules d'une grosseur d'un domaine de >0 à 1000 »m.

2. Procédé selon la revendication 1, caractérisé en ce que la mouture est divisée à une autre étape en deux fractions dont l'une comporte, comme fraction de liant de sauce, des particules d'un diamètre de l'ordre de 150 à 355 »m et l'autre, est utilisable comme semoule instantanée, et contient des particules d'un domaine de grandeur de 355 à 1000 microns.

3. Procédé selon les revendications 1 ou 2, caractérisé en ce qu'on utilise comme mouture de moulin à céréales, de la farine de blé, de maïs ou de blé dur, de la recoupe de blé, ou de la semoule de blé dur.

4. Procédé selon les revendications 1 à 3, caractérisé en ce que les additifs sont choisis parmi l'un au-moins des groupes d'émulsifiants, de protéines, d'arôme/épices et de colorants.

5. Procédé selon l'une des revendications 1 à 4, caractérisé en ce que l'extrusion se fait avec un produit dont l'humidité est de 30%.

6. Procédé selon les revendications 1 à 5, caractérisé en ce que l'extrusion se fait sous une pression de 80 à 160 bars - et de préférence de 140 bars.

7. Procédé selon les revendications 1 à 6, caractérisé en ce que la température d'extrusion est choisie dans un domaine de grandeur de 60 à 140°C - et de préférence de 80°C.

8. Procédé selon l'une des revendications 1 à 7, caractérisé en ce que la longueur de la vis d'extrusion est de 900 à 2500 mm - et de préférence de 1250 mm.

9. Procédé selon l'une des revendications 1 à 8, caractérisé en ce que l'extrusion dure entre 30 secondes et 5 minutes - et de préférence 2 minutes.

10. Utilisation du granulat obtenu selon le procédé des revendication 1 à 9 - et de préférence de la fraction de liant de sauce - pour fabriquer du roux, le granulat étant mélangé à une poudre de 100% de graisse, consistant en billes ayant un diamètre de 20 à 80 microns, dont la structure de cristaux de graisse présente de préférence une structure β.

11. Utilisation d'un granulat pour fabriquer un roux selon la revendication 10, caractérisé en ce que la poudre de graisse ajoutée est produite selon un procédé de pulvérisation à froid.
